# EUROPEAN PATENT SPECIFICATION

(11) **EP 0 414 478 B1**
(45) Date of publication and mention of the grant of the patent: **12.10.1994**
(21) Application number: 90309124.7
(22) Date of filing: 21.08.1990
(51) Int. Cl.: G09G 3/36, G02F 1/136

(54) **A liquid crystal display apparatus**
Flüssigkristall-Anzeigevorrichtung
Dispositif d'affichage à cristal liquide

(30) Priority: 21.08.1989 JP 215785/89; 21.08.1989 JP 215786/89
(43) Date of publication of application: 27.02.1991
(73) Proprietor: SHARP KABUSHIKI KAISHA, Osaka 545 (JP)
(72) Inventor: Hamada, Hiroshi, Nara-shi, Nara-ken (JP); Funada, Fumiaki, Yamatokoriyama-shi, Nara-ken (JP)
(74) Representative: Brown, Kenneth Richard

(56) References cited:
- EP-A- 0 086 349
- WO-A-85/02931
- IBM TECHNICAL DISCLOSURE BULLETIN, vol. 23, no. 8, January 1981, pages 3863-3864, New York, US; S.W. DEPP et al.: "Liquid crystal display driver circuitand polysilicon components therefor"
- IBM TECHNICAL DISCLOSURE BULLETIN, vol. 24, no. 7B, December 1981, pages 3678-3680, New York, US; E.L. NEWMAN: "AC drive circuit for an integrated liquid crystal-silicon display"
- PATENT ABSTRACTS OF JAPAN, vol. 9, no. 161 (P-370)[1884], 5th July 1985;& JP-A-60 37 527
- PATENT ABSTRACTS OF JAPAN, vol. 13, no. 271 (P-889)[3619], 22nd June 1989;& JP-A-1 63 928

## Description

The present invention relates generally to a liquid crystal display apparatus, and more particularly to an active matrix type liquid crystal display apparatus adapted for use in the precision finders of cameras and projection type televisions.

It is known in the art that a matrix type liquid crystal display apparatus is used to utilize the electrooptical effects of liquid crystal to modulate an incident light to picture elements and make up a TV picture and the like. This type of display apparatus includes a liquid crystal layer between two electrodes, that is, a plurality of picture element electrodes arranged in a dot-matrix, and counter electrodes corresponding to the picture element electrodes, wherein the liquid crystal layer optically modulates an incident light in response to an applied voltage.

The matrix type liquid crystal display apparatus, hereinafter referred to as "display apparatus", can take various modes depending upon the kinds of the liquid crystal to be used or the electrooptical properties thereof; for example, a twisted nematic (TN) mode, a super twisted nematic (STN) mode, a guest and host (GH) mode, a dynamic scattering (DS) mode, a phase transition mode, and any other suitable mode can be appropriately selected. The display picture elements consisting of the liquid crystal and the picture element electrodes are individually controlled by various methods, for example:
(1) A simple-matrix method;
(2) A method using a non-linear two-terminal device (e.g., a diode) added to each picture element electrode; and
(3) A method using a switching three-terminal device (e.g., thin film transistor (TFT)) added to each picture element electrode.

The methods (2) and (3) are generally called an active matrix system.

The DS mode (Proc IEEE 56 1162 (1968) by G.H. Heilmeier et al), a White Taylor type GH mode (J. Appl. Phys. 45 4718 (1974) by D.L. White et al), and a cholesteric nematic phase transition mode (Proc. SID 13/2 115 (1980) by J.J. Wysocki) are advantageous when they are used in association with an active matrix system using TFT, in that the display brightness is enhanced without the use of a polarizer.

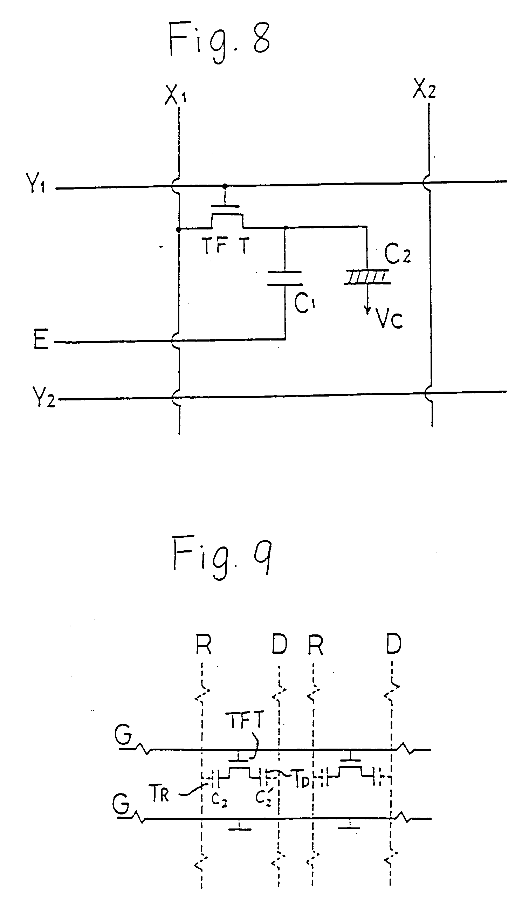

However, this display apparatus has a problem that the addition of a dichroic dye which contains ionizable impurities increases the specific electric conductivity of the liquid crystal layer. As a result, the charge stored in the electrodes between which the liquid crystal layer is sandwiched easily leaks through the liquid crystal layer. To solve this problem, as shown in Figure 8 a signal voltage storing capacitor C₁ (i. e., an additional capacitor) is provided in parallel with a picture element capacitor C₂ connected to a drain electrode of the TFT, so as to increase the capacity of the capacitor C₁. In this way the electric charge is maintained.

However, the method using the signal voltage storing capacitor C₁ basically has a limitation in maintaining the charge, and in order to drive a highly integrated matrix display apparatus having many capacitors C₁ of sufficient capacity, the source driver and the switching TFT must supply a very large current, and the resistance of the source bus line must be very low. In addition, the space for accommodating picture element electrodes is accordingly reduced, and manufacturing difriculty is involved.

Figure 9 shows an example which drives an equivalent circuit in a similar manner to the present invention. That is, an active matrix type liquid crystal display apparatus. The apparatus is provided with picture elements each of which comprises two capacitors C₂ and a three-terminal element such as TFT, wherein the picture elements and the TFT are arranged in a matrix ("Japan Display Digest", page 80 to 83).

In this display apparatus the pairs of picture element electrodes are connected to the source and drain of each TFT and counter electrodes T_{R} and T_{D} corresponding to the respective picture element electrodes. The electrodes T_{R} are connected to a reference electrode line R, and the electrode T_{D} is connected to the data electrode line D. The reference line R is earthed or maintained at a constant level of voltage, and the data electrode line D is applied with a signal voltage in accordance with the information to be displayed. Under this arrangement, when the gate voltage is at a high level, the TFT is on, thereby forming a closed circuit starting from the data electrode line D, the liquid crystal layer, the first picture element electrode, the TFT, the second picture element electrode, the liquid crystal layer, and ending at the reference electrode line R. As long as the gate voltage is at a high level, the capacitors C₂ and C′₂ are charged. However, this charge does not last, and gradually discharges through the liquid crystal layer and switching three-terminal element when the TFT is off. In order to maintain the charge in the capacitors sufficient to drive the liquid crystal properly, it is required to prepare liquid crystal having an extremely high specific resistance.

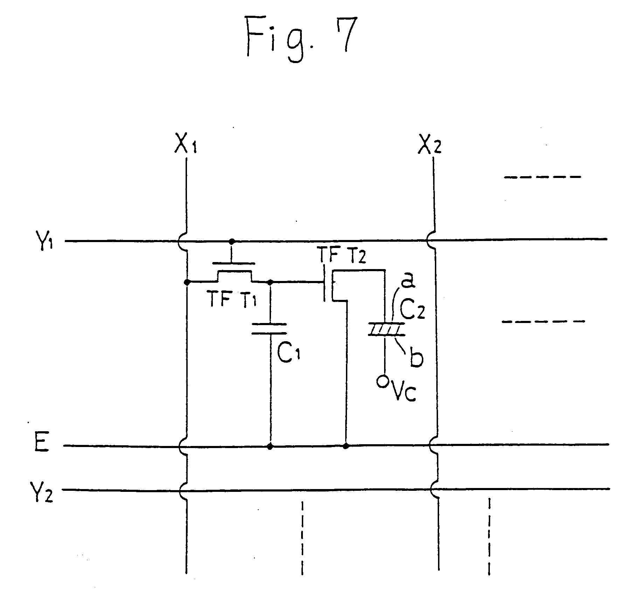

JP-A-57 115 520 (Japanese Patent Application No. 1-95581) and EP-A-0 086 349 disclose circuits similar to that shown in Figure 7, wherein the signal voltage storing capacitor C₁ is separated from the picture element capacitor C₂ by the TFT₂. The TFT₁ and the capacitor C₁ function as a sampling/holding circuit. While the TFT₁ is on, the capacitor C₁ is charged with the signal voltage through the drain of the TFT₁, and after the TFT₁ is off, the capacitor C₁ keeps the signal voltage being applied to the gate of the TFT₂ until the next signal voltage is sampled through the drain. The advantage of this method of Figure 7 is that even if the liquid crystal has a small specific resistance, the display is protected against an unfavorable influence of discharge in the liquid crystal. However, when the halftone image is to be displayed, a problem arises. In Figure 7, suppose that the capacitor C₂ is not charged, that is, the picture element "a" and the counter electrode "b" are at an equal potential, and that the capacitor C₁ is negatively charged. In this situation, the gate potential of the TFT₂ is kept negative, the TFT₂ is off, and the picture element electrode "a" is electrically isolated from the earth line. At this stage, an a.c. voltage V_{C} is applied to the counter electrodes, the potential of the picture element electrode"a"changes accordingly.

Then, when the capacitor C₁ is positively charged, the TFT₂ is on. The capacitor C₂ is charged at a time constant τ_{ON}=C₂ R_{ON}. At this stage, the potential of the picture element electrode "a" has the same polarity as V_{C}, and gradually becomes equal to the earth potential. When the halftone image is to be displayed, it is required to repeat the polar reversion of the voltage V_{C} in a shorter period of time than the period of time required for the complete charging of the capacitor C₂.

However, the polar reversion of voltage V_{C} changes the potential of the drain, thereby changing the "on" resistance R_{ON} of TFT₂. Even if the positive/negative symmetrical a.c. voltage is applied as the voltage V_{C}, the operating point of the TFT₂ changes unavoidably with time, thereby causing the "on" resistance R_{ON} to have different values between the positive half-cycle and the negative half-cycle. Thus, the potentials of the picture element electrode "a" and the counter electrode "b" are non-symmetrical for negative and positive, thereby bringing a direct current component into the voltage applied to the liquid crystal layer of the capacitor C₂. This d.c. component causes a flickering in the pictures on the screen.

When the liquid crystal layer has a d.c. component, the liquid crystal and electrodes are liable to electrolysis. This is detrimental to the formation of clear image.

For further background art, reference is made to WO-A-85/02931 and IBM Technical Disclosure Bulletin, Vol. 24, No. 7B, December 1981, pages 3678-3680.

In one aspect, the invention provides a liquid crystal display apparatus including a plurality of unit circuit areas formed with X electrode lines and Y electrode lines crossing each other in an electrically isolated state, said plurality of unit circuit areas being arranged to provide a matrix comprising rows and columns of display elements, said display apparatus further including first and second counter electrodes and an a.c. voltage source for delivering an a.c. voltage to the first and second counter electrodes, each unit circuit area comprising:
a pair of picture element electrodes each of which opposes a respective one of the first and second counter electrodes;
a first switching three-terminal element having a source connected to one X electrode line and a gate connected to one Y electrode line near a crossover of the one X electrode line and the one Y electrode line;
a liquid crystal layer disposed between the picture element electrodes and the counter electrodes;
a second switching three-terminal element having a gate connected to a drain of the first switching three-terminal element and having a source and a drain connected to the picture element electrodes; and
a signal storing capacitor, one terminal of the signal storing capacitor being electrically connected to the drain of the first switching three-terminal element;
characterised in that:
the other terminal of the signal storing capacitor is electrically connected to either an earth line or another Y electrode line adjacent the one Y electrode line; and
each of the first and second counter electrodes opposes picture element electrodes in plural rows of the matrix and opposes picture element electrodes in plural columns of the matrix.

In a preferred embodiment, the specific resistance of the liquid crystal is not greater than 10⁹ Ωm within the effective range of temperatures at which the liquid crystal display apparatus is operable.

In a further preferred embodiment, the a.c. voltage source delivers a positive/negative symmetrical a.c. voltage having reversed phases in each one cycle.

In another aspect, the invention provides a liquid crystal display apparatus including a plurality of unit circuit areas formed with X electrode lines and Y electrode lines crossing each other in an electrically isolated state, each unit circuit area comprising:
a picture element electrode and a counter electrode;
a first switching three-terminal element having a source connected to one X electrode line and a gate connected to one Y electrode line near a crossover of one X electrode line and the one Y electrode line;
a liquid crystal layer disposed between the picture element electrode and the counter electrode;
a second switching three-terminal element having a gate connected to a drain of the first switching three-terminal element and having a source and a drain, one of its source and drain being connected to the picture element electrode and the other of its source and drain being connected to a common line; and
a signal storing capacitor, one terminal of the signal storing capacitor being electrically connected to the drain of the first switching three-terminal element;
characterised in that:
a first a.c. voltage is applied to the counter electrode and a second a.c. voltage having an opposite phase to the first a.c. voltage is applied to the common line; and
the other terminal of the signal storing capacitor is electrically connected to either an earth line or another Y electrode line adjacent the one Y electrode line.

In a preferred embodiment, a dummy load is additionally inserted between said other of the source and drain of the second switching three-terminal element and the common line, the dummy load having an impedance approximately equal to that of the liquid crystal.

The electrode lines X and Y are selected by scanning at a short frame frequency, so that the first switching three-terminal element is made in the "on" state for a relative short period of time. However, owing to the charge stored in the storing capacitor the voltage is continuously applied to the gate of the second switching three-terminal element until the next signal is sampled, thereby maintaining the second three-terminal element in the "on" state. Since the charge stored in the storing capacitor is separated from the liquid crystal layer by means of the second switching three-terminal element, the charge is prevented from leaking which would otherwise occur through the liquid crystal layer. Thus, the charge is held for a longer period of time. This is important for maintaining a display of clear and non-flickering constant image on the screen.

On the other hand, so long as the second switching three-terminal element is kept on, no unfavorable influence is given on the image on the screen because the charge is continuously delivered to drive the liquid crystal layer even if any leak occurs in the layer. In this case, even if the liquid crystal layer is made of a substance having a small specific resistance, the display is maintained for the duration of one cycle of the frame frequency.

When a positive and negative symmetrical (per one cycle) and an opposite phase voltage is applied between the counter electrode and the common electrode or alternatively a positive and negative symmetrical (per one cycle) voltage is applied to between the pair of counter electrodes, a virtually perfect positive and negative symmetrical voltage is applied to the liquid crystal layer through the second three-terminal element channel, thereby preventing any d.c. component from being applied thereto. This ensures that no flickering occurs in the image on the screen.

Thus, the invention described herein makes possible the objectives of providing a liquid crystal display apparatus (1) which prevents any d.c. component from being unexpectedly applied to the liquid crystal layer, and (2) which can display halftone images as clearly as any other tone images.

This invention may be better understood and its numerous objects and advantages will become apparent to those skilled in the art by reference to the accompanying drawings as follows:
Figure 1 is a circuit diagram showing a unit circuit area of an equivalent circuit used in a liquid crystal display apparatus according to the present invention;
Figure 2 is a schematic plan view of the unit circuit area portion of Figure 1 showing the positional relationship between the picture element electrodes and the counter electrodes;
Figure 3 is a circuit diagram showing a unit circuit area of an equivalent circuit used in a first example of the embodiment;
Figure 4 is a circuit diagram showing a unit circuit area of an equivalent circuit used in a second example of the embodiment;
Figure 5 is a circuit diagram showing a unit circuit area of an equivalent circuit used in a third example of the embodiment;
Figure 6 is a circuit diagram showing a unit circuit area of an equivalent circuit used in a fourth example of the embodiment;
Figure 7 is a circuit diagram showing a unit circuit area of an equivalent circuit used in a liquid crystal display apparatus made prior to the present invention; and
Figures 8 and 9 are circuit diagrams showing unit circuit areas of equivalent circuits used in a known liquid crystal display apparatus.

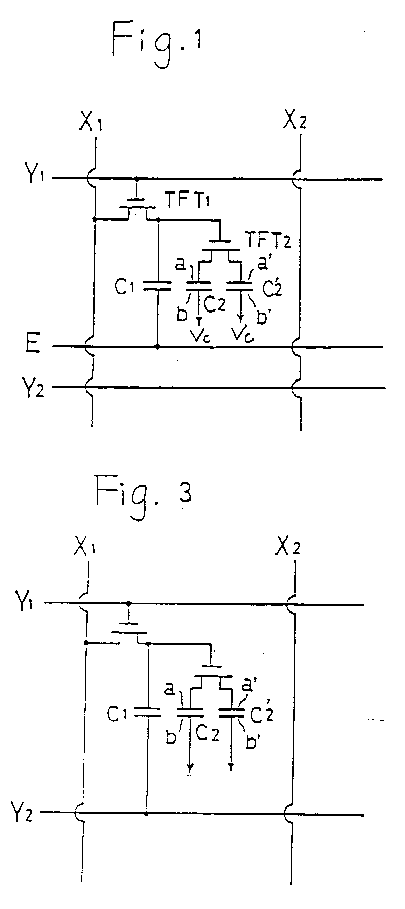

Referring to Figure 1, an example (1) of the embodiment according to the present invention will be described:

Figure 1 shows a unit circuit area of a circuit incorporated in the display apparatus of the present invention. Each unit circuit area is framed by electrode lines X and Y. The unit circuit area has a pair of picture element electrodes and a pair of counter electrodes. A voltage is output by a drain of a first switching three-terminal element that is selected in accordance with electrode line X and Y, thereby storing a charge in a signal voltage storing capacitor, and applying it to a gate of a second switching three-terminal element. Voltage is applied to the unit circuit area whereby the picture element electrodes are energized. By the application of this voltage, a closed circuit is completed from one counter electrode "b", the liquid crystal layer "C₂", one picture element electrode "a", the TFT₂ (i.e., from the source to the drain of the second switching three-terminal element), the other picture element electrode "a′", the crystal liquid layer "C′₂", and the other counter electrode "b′". The picture element electrodes display when the liquid crystal layer is driven by the application of an a.c. voltage.

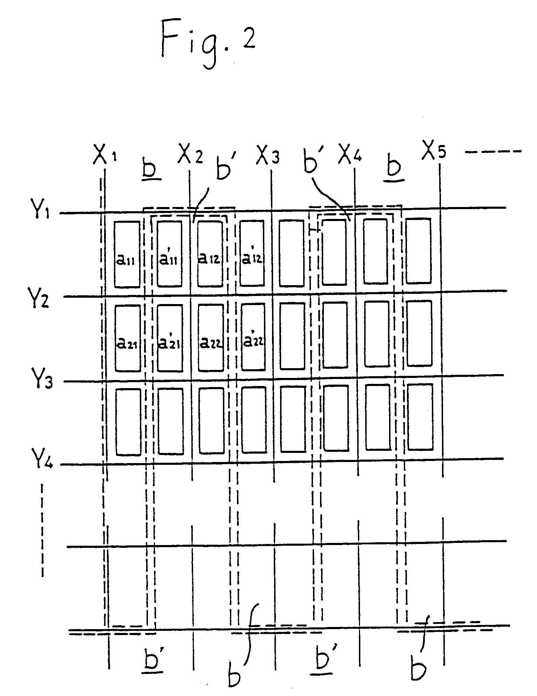

Referring to Figures 1 and 2, the electrode lines X₁, X₂ and so on are bus lines for data signals, and the lines Y₁, Y₂ and so on are also bus lines for scanning signals. These electrode lines X and Y are crossed in an electrically isolated state, that is, with the interposition of insulating films, hereinafter referred to as "crossover". A first TFT₁ is located adjacent to one of the crossoverswhose gate is connected to the line Y (Y₁) and whose source is connected to the line X (X₁). The drain of the TFT₁ is connected to the gate of a second TFT₂ that functions as a second three-terminal element. The TFT₂ is connected to a signal storing capacitor C₁ whose other electrode is earthed.

Referring to Figure 2, the source and drain of the second TFT₂ are connected to a pair of picture element electrodes "a" and "a′". Each pair of picture element electrodes have a pair of counter electrodes "b" and "b′". A liquid crystal layer is disposed between the picture element electrodes and the counter electrodes so as to form picture element capacities C₂ and C′₂. An a.c. voltage source V_{C} delivers a.c. voltage to the liquid crystal layer.

By adopting the circuit mentioned above, a DS mode projection type active matrix liquid crystal display apparatus (hereinafter referred to as "display apparatus") was constructed:
(1) Method of display: projection type
(2) Light source: metalhalide lamp
(3) Size of panel: 3 inches (diagonal)
(4) Number of picture elements: 240 X 384 dots
(5) Substrate of panel: glass 1.1t Corning 7059
(6) TFT₁, TFT₂: amorphous silicon TFT
   Gate made of Ta, oxidized film Ta₂O₅/SiNₓ
   semiconductor made of a-Si by P-CVD
   source, drain made of n⁺ a-Si/Ti
(7) Capacitor C₁: Ta/Ta₂O₅.SiNₓ/Ti
(8) Capacitor C₂: ITO/liquid crystal layer/ITO (thickness of liquid crystal was set by a plastic-bead spacer of 7 µm
(9) Liquid crystal layer: 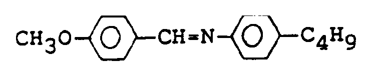 59.5 wt/% 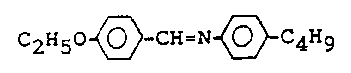 40 wt/%
   The following ionizing impurities were added:
(10) Ionized impurities: 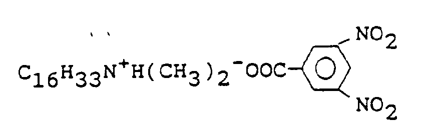 (0.5 wt/%)
(11) A.C.voltage: 60Hz (rectangular waveform) ±7.5V

(Note) The liquid crystal layer has a specific resistance (ρ) of 10⁷ Ωm.

The TFT₁ and the capacitor C₁ constitute a sampling/holding circuit, whose output is connected to the gate of the TFT₂ that functions as a buffer transistor for applying an a.c. voltage to the liquid crystal layer.

Under the arrangement mentioned above, the capacitor C₁ is connected not directly to the capacitors C₂ and C′₂ but to the gate of the second TFT₂ having high input impedance, thereby making it difficult to discharge. As a result, the charge stored in the capacitor C₁ keeps the TFT₂ on for a relative long period of time even after the TFT₁ is off.

This is of particular advantage when the used liquid crystal is of a type which is easy to discharge because of its small specific resistance. In this way, the TFT₂ is prevented from becoming off before a required period of time (usually, 1 cycle of the frame frequency) expires, thereby ensuring that the display apparatus continues to display for a desired period of time.

The a.c. voltage source V_{C} applies an a.c. voltage between the pair of electrodes "b" and "b′". The application of a symmetrical a.c. voltage enables the capacitors C₂ and C′₂ to behave symmetrically in response to the polar changes of the voltage from the power source V_{C} for driving the liquid crystal layer.

The illustrated apparatus takes an inter-digital form in which stripe electrodes "b" and "b′" are disposed in alternate rows along the lines X or Y depending upon the arrangement of pairs of picture element electrodes a₁₁ and a′₁₁, a₁₂ and a′₁₂ and so on.

Figure 2 shows an arrangement in which a pair of picture element electrodes a₁₁ and a′₁₁, a₁₂ and a′₁₂ are laterally disposed, and the counter electrodes of a stripe type are vertically disposed. However, the lateral and vertical directions of them can be changed as a matter of design. A single stripe electrode is disposed in such a manner that it covers one of the picture element electrodes and one of the adjacent picture element electrodes.

The apparatus was experimentally operated to display on a screen, and the resulting image thereon was compared with that obtained by a conventional TN mode apparatus with the use of the same light source. The result was that the luminance was about two times (i.e., 100 fL) that of the image under the known apparatus under the display in white.

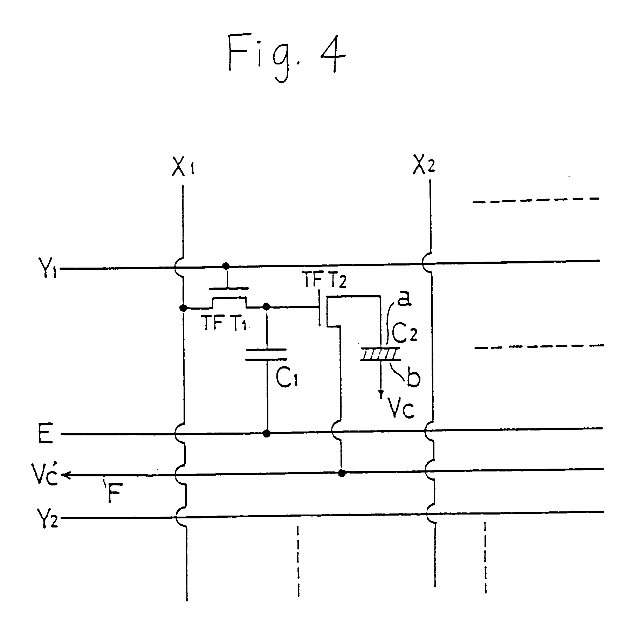

Referring to Figure 3, an example (2) will be described:

This example is different from the first example in that one of the electrodes of the capacitor C₁ is connected to the adjacent gate line. The advantage of this example is that the earth line can be omitted.

Referring to Figure 4, an example (3) will be described:

Basically the circuit has the same construction as that of the first example shown in Figure 1 but it is different therefrom in that one picture element has a single picture element electrode "a", and that the source of the TFT₂, that is, the second switching three-terminal element is connected to the common line F to which an a.c. voltage is applied from a source V_{C}′ to drive the liquid crystal. By adopting this circuit, a DS mode display apparatus having no polarizing filter was constructed:
(1) Method of display: projection type
(2) Light source: metalhalide lamp
(3) Size of panel: 3 inches (diagonal)
(4) Number of picture elements: 240 X 384 dots
(5) Substrate of panel: glass 1.1t Corning 7059
(6) TFT₁, TFT₂: amorphous silicon TFT
   Gate made of Ta, oxidized film Ta₂O₅/SiNₓ
   semiconductor made of a-Si by P-CVD
   source, drain made of n⁺ a-Si/Ti
(7) Capacitor C₁: Ta/Ta₂O₅ . SiNₓ/Ti
(8) Capacitor C₂: ITO/liquid crystal layer/ITO (thickness of liquid crystal was set by a plastic-bead spacer of 7 µm)
(9) Liquid crystal layer: 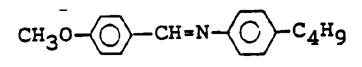 59.5 wt/% 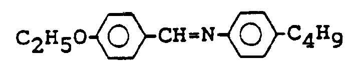 40 wt/%
   The following ionizing impurities were added:
(10) Ionized impurities: 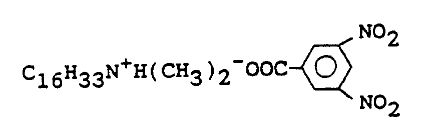 (0.5 wt/%)
(11) A.C. voltage: 60Hz (rectangular waveform) ±7.5V

(Note) The liquid crystal layer has specific resistance of 10⁷ Ωm. The area (S) of the picture element was 100 µm²(10⁻⁸m²),and the thickness (d) of the liquid crystal was 7 µm.
Therefore, the resistance (R_{LC}) was (ρ · d)/S=7 X 10⁹ Ω.

In this example (3) the TFT₁ and capacitor C₁ also function as a sample holding circuit. Therefore, after the TFT₁ was off, the TFT₂ remains on for a longer period of time.

A reversed-phase a.c. voltage is applied to the common line F from the source V_{C}′, the reversed-phase a.c. voltage having the same frequency as that of the voltage applied to the electrodes "b" from the other source V_{C}. In this way the TFT₂ behaves symmetrically when the source V_{C} is positive and negative.

This version was experimentally operated to display on a screen, and the resulting image thereon was compared with that obtained by a conventional TN mode apparatus with the use of the same light source. The result was that the luminance was about two times (i.e., 100 fL) that of the image under the known apparatus under the display in white.

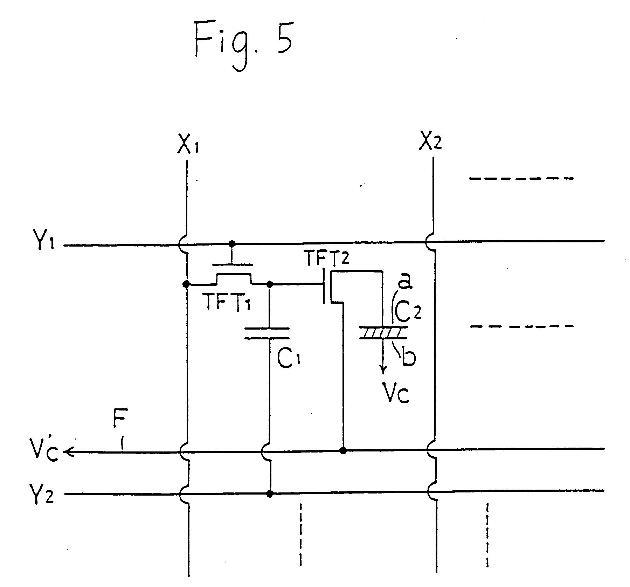

Referring to Figure 5, an example (4) will be described:

This example (4) is different from example (3) of Figure 4, in that one of the electrodes in the capacitor C₁ is connected to the electrode lines Y₂ adjacent thereto, thereby omitting the earth line.

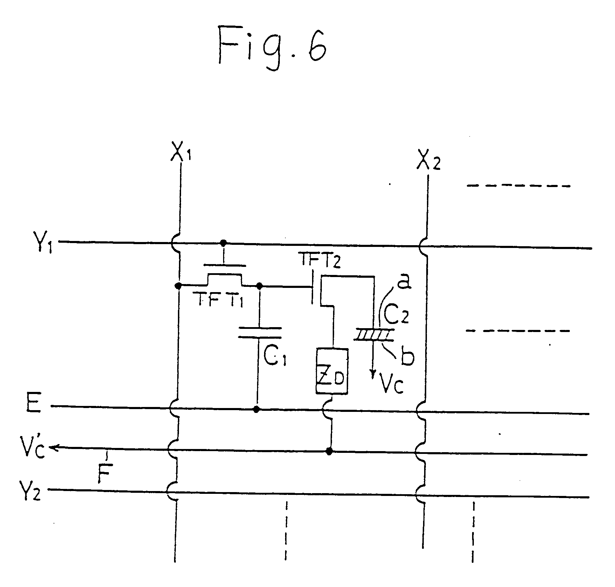

Referring to Figure 6, there is provided an example (5) characterized in that a dummy load Z_{D} is inserted the common line and the drain of the TFT₂. The dummy load, for example, is provided by interposing a non-doped a-Si film (film thickness d=28nm, specific resistance ρ = 10⁸ Ωm) between the drain of the TFT2 and the common line. The overlapping area is 20 µm², and therefore, the dummy load Z_{D} has a resistance R′ of 7x10⁹ Ω, which is equal to the resistance R_{LC} of the liquid crystal. The feature of this example (5) is that the dummy load having the same resistance as that of the liquid crystal is inserted between the drain electrode and the common line, thereby enabling an applied voltage to operate the display apparatus in the same manner irrespective of whether it is negative or positive. As a result, no flickering was discerned.

It is understood that various other modifications will be apparent to and can be readily made by those skilled in the art within the scope of the following claims.

## Claims

1. A liquid crystal display apparatus including a plurality of unit circuit areas formed with X electrode lines (X1,X2 ...) and Y electrode lines (Y1,Y2 ...) crossing each other in an electrically isolated state, said plurality of unit circuit areas being arranged to provide a matrix comprising rows and columns of display elements, said display apparatus further including first and second counter electrodes (b,b′) and an a.c. voltage source for delivering an a.c. voltage (Vc) to the first and second counter electrodes (b,b′), each unit circuit area comprising:
a pair of picture element electrodes (a,a′) each of which opposes a respective one of the first and second counter electrodes (b,b′);
a first switching three-terminal element (TFT1) having a source connected to one X electrode line (X1) and a gate connected to one Y electrode line (Y1) near a crossover of the one X electrode line (X1) and the one Y electrode line (Y1);
a liquid crystal layer disposed between the picture element electrodes (a,a′) and the counter electrodes (b,b′);
a second switching three-terminal element (TFT2) having a gate connected to a drain of the first switching three-terminal element (TFT1) and having a source and a drain connected to the picture element electrodes (a,a′); and
a signal storing capacitor (C1), one terminal of the signal storing capacitor being electrically connected to the drain of the first switching three-terminal element (TFT1);
characterised in that:
the other terminal of the signal storing capacitor (C1) is electrically connected to either an earth line (E) or another Y electrode line (Y2) adjacent the one Y electrode line (Y1); and
each of the first and second counter electrodes (b,b′) opposes picture element electrodes in plural rows of the matrix and opposes picture element electrodes in plural columns of the matrix.

2. A liquid crystal display apparatus according to claim 1, wherein the specific resistance of the liquid crystal is not greater than 10⁹ Ωm within the effective range of temperatures at which the liquid crystal display apparatus is operable.

3. A liquid crystal display apparatus according to claim 1 or 2, wherein the a.c. voltage source delivers a positive/negative symmetrical a.c. voltage having reversed phases in each one cycle.

4. A liquid crystal display apparatus including a plurality of unit circuit areas formed with X electrode lines (X1,X2 ...) and Y electrode lines (Y1,Y2 ...) crossing each other in an electrically isolated state, each unit circuit area comprising:
a picture element electrode (a) and a counter electrode (b);
a first switching three-terminal element (TFT1) having a source connected to one X electrode line (X1) and a gate connected to one Y electrode line (Y1) near a crossover of the one X electrode line (X1) and the one Y electrode line (Y1);
a liquid crystal layer disposed between the picture element electrode (a) and the counter electrode (b);
a second switching three-terminal element (TFT2) having a gate connected to a drain of the first switching three-terminal element (TFT1) and having a source and a drain, one of its source and drain being connected to the picture element electrode (a) and the other of its source and drain being connected to a common line (F); and
a signal storing capacitor (C1), one terminal of the signal storing capacitor being electrically connected to the drain of the first switching three-terminal element (TFT1);
characterised in that:
a first a.c. voltage (Vc) is applied to the counter electrode (b) and a second a.c. voltage (Vc′) having an opposite phase to the first a.c. voltage (Vc) is applied to the common line (F); and
the other terminal of the signal storing capacitor (C1) is electrically connected to either an earth line (E) or another Y electrode line (Y2) adjacent the one Y electrode line (Y1).

5. A liquid crystal display apparatus according to claim 4, which further comprises a dummy load (Z_{D}) connected between said other of the source and drain of the second switching three-terminal element (TFT2) and the common line (F), the dummy load (Z_{D}) having an impedance approximately equal to that of the liquid crystal.

## Patentansprüche

1. Flüssigkristall-Anzeigevorrichtung mit mehreren Bereichen mit Schaltungseinheiten, die durch X-Elektroden-Leitungen (X1, X2, ...) und Y-Elektroden-Leitungen (Y1, Y2, ...) gebildet werden, die sich in elektrisch isoliertem Zustand überkreuzen, wobei die mehreren Bereiche von Schaltungseinheiten so angeordnet sind, daß sie für eine Matrix mit Zeilen und Spalten von Anzeigeelementen sorgen, wobei die Anzeigevorrichtung ferner eine erste und eine zweite Gegenelektrode (b, b′) und eine Spannungsquelle zum Ausgeben einer Wechselspannung (Vc) an die erste und die zweite Gegenelektrode (b, b′) beinhaltet, wobei jeder Bereich einer Schaltungseinheit folgendes aufweist:
- ein Paar Bildelementelektroden (a, a′), von denen jede einer jeweiligen der ersten und zweiten Gegenelektrode (b, b′) gegenübersteht;
- ein erstes Schaltelement (TFT1) mit drei Anschlüssen, das eine mit einer X-Elektroden-Leitung (X1) verbundene Source und ein mit einer Y-Elektroden-Leitung (Y1) verbundenes Gate nahe einer Überkreuzung zwischen der einen X-Elektroden-Leitung (X1) und der einen Y-Elektroden-Leitung (Y1) aufweist;
- eine Flüssigkristallschicht, die zwischen den Bildelementelektroden (a, a′) und den Gegenelektroden (b, b′) liegt;
- ein zweites Schaltelement (TFT2) mit drei Elementen, mit einem mit dem Drain des ersten Schaltelements mit drei Anschlüssen (TFT1) verbundenen Gate und einer Source und einem Drain, die mit den Bildelementelektroden (a, a′) verbunden sind; und
- einen Signalspeicherkondensator (C1), wobei ein Anschluß dieses Signalspeicherkondensators elektrisch mit dem Drain des ersten Schaltelements mit drei Anschlüssen (TFT1) verbunden ist;
**dadurch** **gekennzeichnet**, daß:
- der andere Anschluß des signalspeicherkondensators (C1) elektrisch entweder mit einer Masseleitung (E) oder einer anderen Y-Elektrodenleitung (Y2) verbunden ist, die benachbart zur einen Y-Elektroden-Leitung (Y1) liegt; und
- von der ersten und zweiten Gegenelektrode (b, b′) jede Bildelementelektrode in mehreren Zeilen der Matrix gegenübersteht und Bildelementelektroden in mehreren Spalten der Matrix gegenübersteht.

2. Flüssigkristall-Anzeigevorrichtung nach Anspruch 1, bei der der spezifische Widerstand des Flüssigkristalls innerhalb des effektiven Temperaturbereichs, in dem die Flüssigkristall-Anzeigevorrichtung betreibbar ist, nicht größer als 10⁹ Ωm ist.

3. Flüssigkristall-Anzeigevorrichtung nach Anspruch 1 oder Anspruch 2, bei der die Wechselspannungsquelle eine für positiv und negativ symmetrische Wechselspannung ausgibt, deren Phase in jedem Zyklus umgedreht wird.

4. Flüssigkristall-Anzeigevorrichtung mit mehreren Bereichen mit Schaltungseinheiten, die durch X-Elektroden-Leitungen (X1, X2, ...) und Y-Elektroden-Leitungen (Y1, Y2, ...) gebildet werden, die sich in elektrisch isoliertem Zustand überkreuzen, wobei jeder Bereich einer Schaltungseinheit folgendes aufweist:
- eine Bildelementelektrode (a) und eine Gegenelektrode (b);
- ein erstes Schaltelement (TFT1) mit drei Anschlüssen, das eine mit einer X-Elektroden-Leitung (X1) verbundene Source und ein mit einer Y-Elektroden-Leitung (Y1) verbundenes Gate nahe einer Überkreuzung zwischen der einen X-Elektroden-Leitung (X1) und der einen Y-Elektroden-Leitung (Y1) aufweist;
- eine Flüssigkristallschicht, die zwischen der Bildelementelektroden (a) und der Gegenelektrode (b) liegt;
- ein zweites Schaltelement (TFT2) mit drei Elementen, mit einem mit dem Drain des ersten Schaltelements mit drei Anschlüssen (TFT1) verbundenen Gate und einer Source und einem Drain, wobei die Source oder der Drain mit der Bildelementelektrode (a) verbunden ist und der andere Anschluß von Source und Drain mit einer gemeinsamen Leitung (F) verbunden ist; und
- einen Signalspeicherkondensator (C1), wobei ein Anschluß dieses Signalspeicherkondensators elektrisch mit dem Drain des ersten Schaltelements mit drei Anschlüssen (TFT1) verbunden ist;
**dadurch** **gekennzeichnet**, daß:
- eine erste Wechselspannung (Vc) an die erste Gegenelektrode (b) angelegt wird, und eine zweite Wechselspannung (Vc′) mit einer Phase, die derjenigen der ersten Wechselspannung (Vc) entgegengesetzt ist, an die gemeinsame Leitung (F) angelegt wird; und
- der andere Anschluß des Signalspeicherkondensators (C1) elektrisch entweder mit einer Masseleitung (E) oder einer anderen Y-Elektroden-Leitung (Y2) verbunden wird, die benachbart zur einen genannten Y-Elektroden-Leitung (Y1) liegt.

5. Flüssigkristall-Anzeigevorrichtung nach Anspruch 4, die ferner eine Attrappenlast (Z_{D}) aufweist, die zwischen den anderen Anschluß von Source und Drain des zweiten Schaltelements mit drei Anschlüssen (TFT2) und die gemeinsame Leitung (F) geschaltet ist, welche Attrappenlast (Z_{D}) eine Impedanz aufweist, die ungefähr derjenigen des Flüssigkristalls entspricht.

## Revendications

1. Dispositif d'affichage à cristal liquide incluant une pluralité de zones de circuit unité constituées avec des lignes d'électrode X (X1, X2 ...) et des lignes d'électrode Y (Y1, Y2 ...) se croisant entre elles dans un état électriquement isolé, ladite pluralité de zones de circuit unité étant disposée de façon à fournir une matrice comprenant des rangées et des colonnes d'éléments d'affichage, ledit dispositif d'affichage incluant également des première et seconde contre-électrodes (b, b′) et une source de tension alternative pour délivrer une tension alternative (Vc) aux première et seconde contre-électrodes (b, b′), chaque zone de circuit unité comprenant:
une paire d'électrodes d'élément d'image (a, a'), chacune d'elles faisant face à une contre-électrode respective des première et seconde contre-électrodes (b, b′);
un premier élément de commutation tripolaire (TFT1) ayant une électrode de source connectée à une ligne d'électrode X (X1) et une électrode de grille connectée à une ligne d'électrode Y (Y1) à proximité d'un croisement entre la ligne d'électrode X (X1) et la ligne d'électrode Y (Y1);
une couche de cristal liquide disposée entre les électrodes d'élément d'image (a, a′) et les contre-électrodes (b, b′);
un second élément de commutation tripolaire (TFT2) ayant une électrode de grille connectée à une électrode de drain du premier élément de commutation tripolaire (TFT1) et ayant une électrode de source et une électrode de drain connectées aux électrodes d'élément d'image (a, a′); et
un condensateur de mémorisation de signal (C1) dont une borne est connectée électriquement à l'électrode de drain du premier élément de commutation tripolaire (TFT1);
caractérisé en ce que:
l'autre borne du condensateur de mémorisation de signal (C1) est électriquement connectée à soit une ligne de terre (E) soit une autre ligne d'électrode Y (Y2) adjacente à la ligne d'électrode Y (Y1); et
chacune des première et seconde contre-électrodes (b, b′) fait face à des électrodes d'élément d'image dans plusieurs rangées de la matrice et fait face à des électrodes d'élément d'image dans plusieurs colonnes de la matrice.

2. Dispositif d'affichage à cristal liquide selon la revendication 1, dans lequel une résistance spécifique du cristal liquide n'est pas supérieure à 10⁹ Ωm dans la gamme effective des températures auxquelles fonctionne le dispositif d'affichage à cristal liquide.

3. Dispositif d'affichage à cristal liquide selon la revendication 1 ou 2, dans lequel une source de tension alternative délivre une tension alternative symétrique positive/négative ayant des phases qui s'inversent dans chaque cycle.

4. Dispositif d'affichage à cristal liquide incluant une pluralité de zones de circuit unité constituées avec des lignes d'électrode X (X1, X2 ...) et des lignes d'électrode Y (Y1, Y2 ...) se croisant entre elles dans un état électriquement isolé, chaque zone de circuit unité comprenant:
un électrode d'élément d'image (a) et une contre-électrode (b);
un premier élément de commutation tripolaire (TFT1) ayant une électrode de source connectée à une ligne d'électrode X (X1) et une électrode de grille connectée à une ligne d'électrode Y (Y1) à proximité d'un croisement de la ligne d'électrode X (X1) et de la ligne d'électrode Y (Y1);
une couche de cristal liquide disposée entre l'électrode d'élément d'image (a) et la contre-électrode (b);
un second élément de commutation tripolaire (TFT2) ayant une électrode de grille connectée à une électrode de drain du premier élément de commutation tripolaire (TFT1) et ayant une électrode de source et une électrode de drain, l'une de ses électrodes de source et de drain étant connectée à l'électrode d'élément d'image (a) et l'autre de ses électrodes de source et de drain étant connectée à une ligne commune (F); et
un condensateur de mémorisation de signal (C1) dont une borne est connectée électriquement à l'électrode de drain du premier élément de commutation tripolaire (TFT1);
caractérisé en ce que:
une première tension alternative (Vc) est appliquée à la contre-électrode (b) et une seconde tension alternative (Vc′) ayant une phase opposée à celle de la première tension alternative (Vc) est appliquée à la ligne commune (F); et
l'autre borne du condensateur de mémorisation de signal (C1) est électriquement connectée soit à une ligne de terre (E) soit à une autre ligne d'électrode Y (Y2) adjacente à la ligne d'électrode Y (Y1).

5. Dispositif d'affichage à cristal liquide selon la revendication 4, comprenant également une charge fictive (Z_{D}) connectée entre ladite autre électrode des électrodes de drain et de source du second élément de commutation tripolaire (TFT2) et la ligne commune (F), la charge fictive (Z_{D}) ayant une impédance approximativement égale à celle du cristal liquide.
